# EUROPÄISCHE PATENTSCHRIFT

(11) **EP 0 490 088 B1**
(45) Veröffentlichungstag und Bekanntmachung des Hinweises auf die Patenterteilung: **02.03.1994**
(21) Anmeldenummer: 91119124.5
(22) Anmeldetag: 11.11.1991
(51) Int. Cl.: F02D 43/00, F02D 41/02, F02D 41/26

(54) **Schaltungsanordnung zur elektronischen Steuerung einer Verbrennungskraftmaschine**
Circuit for the electronic control of an internal combustion engine
Circuit pour la commande électronique d'un moteur à combustion interne

(30) Priorität: 07.12.1990 DE 4039062
(43) Veröffentlichungstag der Anmeldung: 17.06.1992
(73) Patentinhaber: VOGT electronic AG, D-94130 Obernzell (DE)
(72) Erfinder: Hartmann, Uwe (verstorben), W-7730 Villingen-Schwenningen (DE); Udo, Mai, W-8391 Untergriesbach (DE)
(74) Vertreter: Patentanwälte Westphal, Buchner, Mussgnug Neunert, Göhring

(56) Entgegenhaltungen:
- EP-A- 0 154 654
- EP-A- 0 225 528
- DE-A- 3 707 190
- US-A- 4 742 811
- PATENT ABSTRACTS OF JAPAN vol. 013, no. 422 (P-933) 20. September 1989 & JP-A-1 153 910 (OMRON TATEISI ELECTRON CO) 16. Juni 1989
- PATENT ABSTRACTS OF JAPAN vol. 013, no. 051 (E-712) 6. Februar 1987 & JP-A-63 242 028 (ISHIKAWAJIMA HARIMA HEAVY IND) 7. Oktober 1988

## Beschreibung

Die Erfindung betrifft eine Schaltungsanordnung zur elektronischen Steuerung einer Verbrennungskraftmaschine gemäß dem Oberbegriff des Patentanspruchs 1.

Die Verwendung elektronischer Bauteile, insbesondere zur Steuerung von Verbrennungskraftmaschinen z. B. in Kraftfahrzeugen ist bekannt. Derartige Bauelemente werden vorzugsweise eingesetzt, um im Zusammenwirken mit mechanischen Bauteilen den Funktionsablauf kostengünstig zu verbessern. So ist z. B. bei herkömmlichen Verbrennungskraftmaschinen das Zündverhalten (Zündzeitpunkt) mittels einer elektronisch aufbereiteten und von der Umdrehungszahl der Kraftmaschine abhängigen Kennlinie steuerbar.

Auch ist aus der DE 35 37 000 die Verwendung einer Codierscheibe, die mit einem Gray-Code versehen ist, und eines die Codierscheibe abtastenden Sensors zur statischen Erfassung der für die Zündauslösung ermittelten Lasterfassung bei einem Gleichdruckvergaser bekannt.

Weiterhin sind aus der DE-OS 36 30 272 Vorrichtungen zum Steuern einer Brennkraftmaschine bekannt, bei denen die Position einer mit einer Welle der Brennkraftmaschine verbundenen Geberscheibe, die eine als Markierung ausgebildete Perforation aufweist, von einem raumfesten Aufnahmesegment registriert wird. Ein Nachteil dieser bekannten Steuervorrichtungen ist, daß diese nur die Steuerung einer einzigen Regelgröße (z. B. die Zündauslösung) ermöglichen.

In der DE 36 09 070 A1 wird ein elektronisches Steuersystem für Verbrennungsmotoren beschrieben, bei welchem zwei durch Übertragungsleitungen miteinander verbundene Zentralrecheneinheiten eingangsseitig mit einzelnen den Motorzustand kennzeichnenden Größen versorgt werden. Neben den die Belastung des Motors angebenden Betriebsparametern werden einer Zentraleinheit Motorrotationsparameter zugeführt, die einer vorbestimmten Kurbelwinkellage entsprechen und welche von einer Abtasteinrichtung erfaßt werden. Dabei erzeugt ein Abtastsensor ein Bezugskurbelwinkelsignal, welches einer vorbestimmten festen Kurbelwinkellage eines einzelnen Motorzylinders entspricht, wodurch insbesondere lediglich relative Kurbelwinkelpositionen bestimmbar sind.

Aus US-A 4 742 811 ist eine Vorrichtung zur Zündzeitpunkt-Steuerung für Verbrennungsmaschinen bekannt. Der Kurbelwellenwinkel wird mit Hilfe eines mehrere magnetische Sektoren aufweisenden Zylinders mit Hilfe von Hall-Sonden bestimmt. Wesentlicher Nachteil hierbei ist, daß die Winkelposition im Stillstand nicht bestimmbar ist.

Der Erfindung liegt die Aufgabe zugrunde, eine elektronische Steuerung für Verbrennungskraftmaschinen zu schaffen, die die oben genannten Mängel vermeidet, eine hohe Betriebszuverlässigkeit aufweist und kostengünstig zu fertigen ist.

Diese Aufgabe wird erfindungsgemäß durch die im Patentanspruch 1 genannten kennzeichnenden Merkmale gelöst.

Weiterbildende vorteilhafte Merkmale sind in den Unteransprüchen angegeben.

Eine erfindungsgemäße Schaltungsanordnung für Verbrennungskraftmaschinen weist als wesentliche Komponenten eine elektronische Steuereinheit (Rechner), einen Absolutwertwinkelgeber, eine Motorstillstandserkennungsschaltung, eine Zündfolgeschaltung und eine Ventilsteuervorrichtung auf. Die Ansteuerung der elektrischen Funktionen der Zündfolgeschaltung und der Ventilsteuervorrichtung wird von der elektronischen Steuereinheit durchgeführt. Zur Ansteuerung der Steuereinheit werden dem Rechner von dem Absolutwertwinkelgeber, der den Kurbelwellenwinkel im dynamischen und statischen Zustand erfaßt, elektrische und mittels Signalformungsmodulen aufbereitete Signale zugeführt, die Regelgrößen darstellen. Weiterhin werden der Steuereinheit elektrische Signale von dem Absolutwertwinkelgeber und der Ventilsteuerung zugeführt, mittels derer der Winkelgebercode und die Ventilarbeitsfolge überwacht wird.

Mit einer gemäß der Erfindung vorgeschlagenen voll-elektronischen Schaltungsvorrichtung zur Steuerung der Verbrennungskraftmaschine lassen sich folgenden Vorteile erzielen:
1. Verzicht auf eine elektrische Starthilfe (Anlasser),
2. Verzicht auf einen mechanisch angetriebenen Zündverteiler,
3. Verzicht auf eine die Einlaß- und Auslaßventile steuernde Nockenwelle und
4. neuartige Steuerung eines Zweitaktverbrennungsmotors, bei welchem vor allem die Kraftstoff-Luft-Gemisch-Zusammensetzung und die Phasenlage zwischen Kraftstoffeinspritzung und Kolbenposition in Abhängigkeit von den Betriebsdaten elektrisch steuerbar sind.

Der Absolutwertwinkelgeber besteht aus einem auf einer Kurbelwelle montierten Rad, das auf seiner Oberfläche einen eindeutig identifizierbaren Code trägt, der von einem Sensor abgetastet wird. Die Abtastung durch den Sensor erfolgt z. B. induktiv oder optisch. Vorzugsweise wird für die Codierscheibe (Rad) ein einschrittiger 9-Bit-Gray-Code, der eine auf 0,7° genaue Bestimmung der Kurbelwellenwinkelposition ermöglicht, verwendet. Die Codemuster der einzelnen Spuren der Codierscheibe werden mittels eines Multifunktionssensors mit integrierter Elektronik simultan abgetastet und in elektrische Signale, die zur weiteren Verarbeitung aufbereitet werden, umgesetzt. Diese elektronisch aufbereiteten Signale werden über eine parallel serielle Schnittstelle (Parallelserienwandler) der Steuereinheit sequentiell zugeführt.

Mit dem Eingang des niederwertigsten Bits des Parallelserienwandlers ist der Eingang der Motorstillstandserkennungsschaltung verbunden. In der Eingangsstufe der Motorstillstandserkennungsschaltung wird das Eingangssignal elektronisch differenziert und einem Zähler zugeführt, der bei Fehlen eines eingangsseitigen Signals ausgangsseitig ein dem Motorzustand (Stillstand oder Betrieb) entsprechendes Signal erzeugt, welches der Steuereinheit zugeführt wird. Die simultane elektronische Auswertung sämtlicher (9 Bit) Codespuren und einer einzigen Codespur, nämlich der niederwertigsten (1. Bit), ist somit vorteilhaft durch eine schnellarbeitende Motorstillstandserkennungsschaltung und in Ergänzung dazu mittels einer hoch auflösenden Kurbelwellenwinkelpositionsbestimmung in der Steuereinheit möglich.

Aus den der Steuereinheit von der Motorstillstandserkennungsschaltung und dem Absolutwertwinkelgeber zugeführten elektrischen Signalen werden von der Steuereinheit einzelne jeweils einem Zylinder zugeordnete Einspritzventile, Einlaßventile, Auslaßventile und Zündkerzen angesteuert, die jeweils aus einem elektrischen Schalter und einem z. B. elektromagnetisch betriebenen Ventil bzw. einer Zündvorrichtung und einer Zündkerze bestehen, im folgenden Einspritzventilmodul, Einlaßventilmodul, Auslaßventilmodul und Zündmodul genannt. Die Reihenfolge der sequentiellen Ansteuerung der einzelnen Module erfolgt in Abhängigkeit der Gesamtzylinderzahl der Verbrennungskraftmaschine und der Zylinderarbeitszyklen. Gemäß einer Unterteilung der Zylinderarbeitszyklen in eine Zünd-, Zylinderschließ- und Zylinderöffnungsfolge wird eine Kurbelwellenumdrehung mit der halben Zylinderzahl gleichmäßig aufgeteilt, z. B. für eine sechszylindrige Verbrennungskraftmaschine in drei Sektoren à 120°. Als Ersatz für die Nockenwellensignalfunktion werden mittels einer Flip-Flop-Schaltung die Sektoren nach einer Kurbelwellenumdrehung auf die jeweils andere Zylindergruppe umgeschaltet. So erfolgt bei der ersten Umdrehung die Zündung in den Zylindern 1, 2 und 3 und während der zweiten Umdrehung in den Zylindern 4, 5 und 6. Analog dieser Zündreihenfolge erfolgt die Ventilansteuerung. Vorteilhaft ist, daß bei einer derartigen Unterteilung in drei 120°-Sektoren der Zündzeitpunkt und auch die Zünddauer den momentanen Motorbedürfnissen präzise anpaßbar sind.

Ebenfalls sind die einzelnen Ventilsteuermodule jeweils entsprechend dem aktuellen Motorzustand ansteuerbar. So können während des Motorlaufs jederzeit eine Optimierung der Ventilschließ- und Ventilöffnungszeiten sowie deren Phasenlage zueinander eingestellt werden. Wegen der absoluten, d. h. statischen, Kurbelwellenwinkelerfassung kann für den Start einer derartig elektronisch gesteuerten Verbrennungskraftmaschine auf eine elektrisch angetriebene Starthilfe (Anlasser) gänzlich verzichtet werden. Während der Start- und Hochlaufphase läßt sich folgender Funktionsablauf realisieren:
- Einschalten der Betriebsspannung (z. B. mit dem Zündschalter),
- Aufbau eines Überdrucks (ca. 3 atm) im Ansaugkanal mittels eines der Drosselklappe vorgeschalteten Kompressors,
- kurzzeitiges Öffnen aller Ein- und Auslaßventile zur Spülung,
- sequentielles Öffnen der Einlaßventile für diejenigen Zylinder, deren Kolbenposition sich unmittelbar nach dem oberen Totpunkt (vor dem unteren Totpunkt) sowie derjenigen Zylinder, deren Kolbenposition sich unmittelbar vor dem oberen Totpunkt befindet, um Luft einzulassen,
- Schließen der Einlaßventile,
- Kraftstoffdirekteinspritzung (Ansteuerung der Einspritzventile) für die zu zündenden Zylinder, wobei die Einspritzventile von der Steuereinheit derart angesteuert werden, daß sich ein Wert für λ= 1 ergibt,
- Zündung der Zylinder, deren Kolbenposition sich unmittelbar nach dem oberen Totpunkt aber vor dem unteren Totpunkt befindet, wobei die Zünddauer bis zur Bewegung der Kolben in den unteren Totpunkt eingeschaltet bleibt,
- anschließende Zündung der Kolben, die nun den oberen Totpunkt überschritten haben, wobei die Zünddauer sich bis zur Abwärtsbewegung des Kolbens in den unteren Totpunkt erstreckt und
- Übergang (Hochlauf) in den Normalbetrieb.

Erst im Normalbetrieb wird die Drosselklappenposition und die Ventilmodulansteuerung von der Steuereinheit in Abhängigkeit des Ausgangssignals der Motorstillstandserkennungsschaltung von Start- auf Normalbetrieb umgeschaltet.

Vorteilhaft sind die elektrisch angesteuerten Einlaß-, Auslaß- und Einspritzventile auch beim Motorstart sequentiell ansteuerbar, wodurch die elektrische Leistungsaufnahme reduziert wird.

Auch läßt sich durch den Vorschlag der unter Verzicht auf eine Nockenwelle nicht miteinander mechanisch gekoppelten Ein-, Auslaß- und der Einspritzventile sowie der Zündmodule ein Zweitaktbetrieb unter Meidung der bekannten Nachteile realisieren. Der Wechsel der Zylinderladung, d. h. die Spülung, erfolgt durch gleich- und kurzzeitiges Öffnen der Ein- und Auslaßventile, wodurch eine Zwangsspülung mit Luft erfolgt. Im Anschluß daran wird Kraftstoff mittels der Einspritzventile in den Zylinder gespritzt. Dabei bestimmt der Einlaßdruck die Phasenlage zur Spülung der Kolbenposition. Durch Variation des Kraftstoffeinlaßdruckes kann der Einlaßdruck so groß gewählt werden, daß er dem Zylinderinnendruck im oberen Totpunkt entspricht, wodurch auf eine Zwangsspülung verzichtet werden kann. In diesem Fall erfolgt der Abgasausstoß nahezu während des gesamten zweiten Taktes, wohingegen die Beschickung des Zylinders mit Kraftstoff erst vor dem oberen Totpunkt erfolgt. Dadurch ist eine flexible Anpassung an die speziellen Motorbedürfnisse wie Motordrehmoment, Motorleistung, Kraftstoffparameter und Gemischzusammensetzung möglich.

Im folgenden wird die Erfindung anhand eines bevorzugten und in Zeichnungen dargestellten Ausführungsbeispiels näher erläutert. Es zeigen:
- Figur 1: Blockschaltbild einer erfindungsgemäßen elektronischen Steuerung für Verbrennungskraftmaschinen,
- Figur 2: Blockschaltbild des 9-Bit-Absolutwertwinkelgebers und
- Figur 3: Blockschaltbild der Schaltung zur Motorstillstandserkennung gemäß der Erfindung.

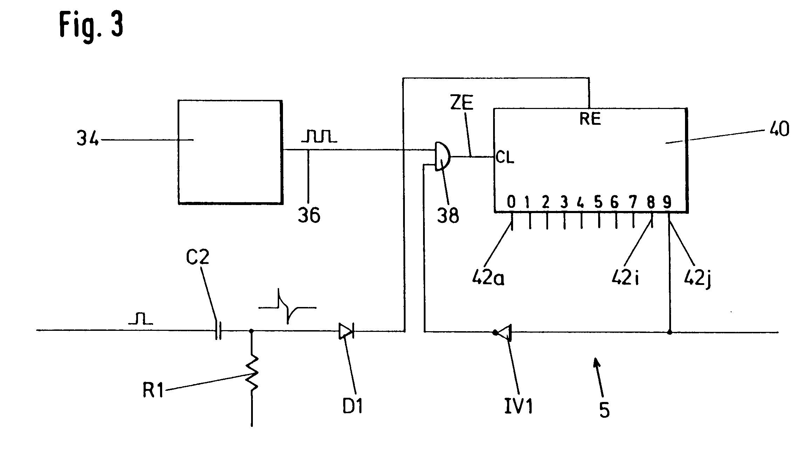

Die Schaltung zur elektronischen Steuerung der Verbrennungskraftmaschine umfaßt eine zentrale Steuereinheit 2, einen Absolutwertwinkelgeber 4, einen elektronischen Steuerprogrammspeicher 6, eine in Fig. 3 dargestellte Motorstillstandserkennungsschaltung 5 sowie entsprechend der Anzahl der anzusteuernden Motorzylinder Einspritzventilmodule 10, 11, Einlaßventilmodule 12, 13, Auslaßventilmodule 14, 15 und Zündmodule 16, 17.

Die Steuerung sämtlicher Module 10 bis 17 erfolgt durch die Steuereinheit 2 in Abhängigkeit der momentanen Betriebsparameter der Verbrennungskraftmaschine, die der Steuereinheit 2 von dem Absolutwertwinkelgeber 4 und zusätzlichen, die Betriebsparameter der Verbrennungskraftmaschine messenden Sensoren über Datenleitungen 7 zugeführt werden.

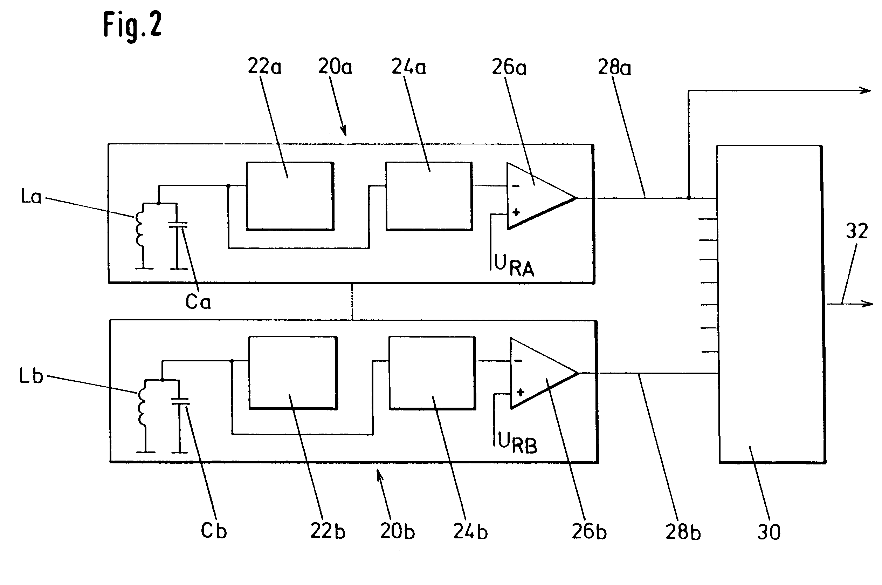

Der Absolutwertwinkelgeber 4 besteht aus insgesamt neun Signalformungsmodulen, von denen in Fig. 2 nur zwei 20a, 20b dargestellt sind. Die Signalformungsmodule 20a, 20b weisen jeweils einen Parallelschwingkreis, bestehend aus einer Induktivität La bzw. Lb und einem Kondensator Ca bzw. Cb, einen Oszillator 22a bzw. 22b sowie einen seriell zum Parallelschwingkreis geschalteten Demodulator 24a bzw. 24b auf, wobei jeweils der Ausgang des Demodulators 24a bzw. 24b mit dem invertierenden Eingang eines Komparators 26a bzw. 26b verbunden ist. In Zusammenwirken mit einer am nicht invertierenden Eingang des Komparators 26a bzw. 26b anliegenden Referenzspannung U_{RA} bzw. U_{RB} erzeugt der Komparator 26a bzw. 26b ein Ausgangssignal, das über eine Datenleitung 28a bzw. 28b dem Paralleleingang eines Parallel-Serien-Wandlers 30 zugeführt wird. Die parallel zugeführten Winkelpositionsdaten des Absolutwertwinkelgebers 4 werden über eine Datenleitung 32, die den Parallel-Serien-Wandler 30 ausgangsseitig mit der Steuereinheit 2 eingangsseitig verbindet, sequentiell übertragen.

Mit dem niederwertigsten Paralleleingang (1. Bit) des Parallel-Serien-Wandlers 30 ist der Eingang der Motorstillstandserkennungsschaltung 5 verbunden. Die in Figur 3 dargestellte Motorstillstandserkennungsschaltung 5 weist eine mit dem Eingang RE des Zählers verbundene Differenzierschaltung auf, die aus dem Kondensator C1 und dem mit Masse verbundenen Widerstand R1 besteht. Mit dem Kondensator C1 und dem Widerstand R1 ist eine Diode D1 in Durchgangsrichtung mit dem Rücksetzeingang RE eines Zählers 40 verbunden. Weiterhin weist die Motorstillstandserkennungsschaltung 5 einen Signalgenerator 34, ein UND-Logikbauteil 38 und einen Inverter IV1 auf. Ausgangsseitig ist der Signalgenerator 34 über eine Signalleitung 36 mit einem Eingang des UND-Logikbauteils 38 verbunden. Der zweite Eingang des UND-Logikbauteils 38 ist mit dem Ausgang des Inverters IV1, der eingangsseitig an dem höchstwertigen Zählerausgang 42j (9. Bit) liegt, verbunden. Ausgangsseitig liegt das UND-Logikbauteil 38 am Zählereingang CL des Zählers 40 an. Bei Vorhandensein eines Eingangssignals liegt am Rücksetzeingang RE des Zählers 40 ein Signal an, so daß der Zähler 40 ausgangsseitig am höchstwertigen Zählerausgang 42j ein Low-Pegel annimmt. Erst bei Fehlen eines Eingangssignals, d. h. bei Motorstillstand, wird über die vom Signalgenerator 34 über das UND-Logikbauteil 38 in den Zähler 40 eingespeiste Pulsfolge der Zähler 40 aktiv und nimmt ausgangsseitig einen High-Pegel an. Der Zählerausgang 42j ist mit dem Eingang der Steuereinheit 2 verbunden.

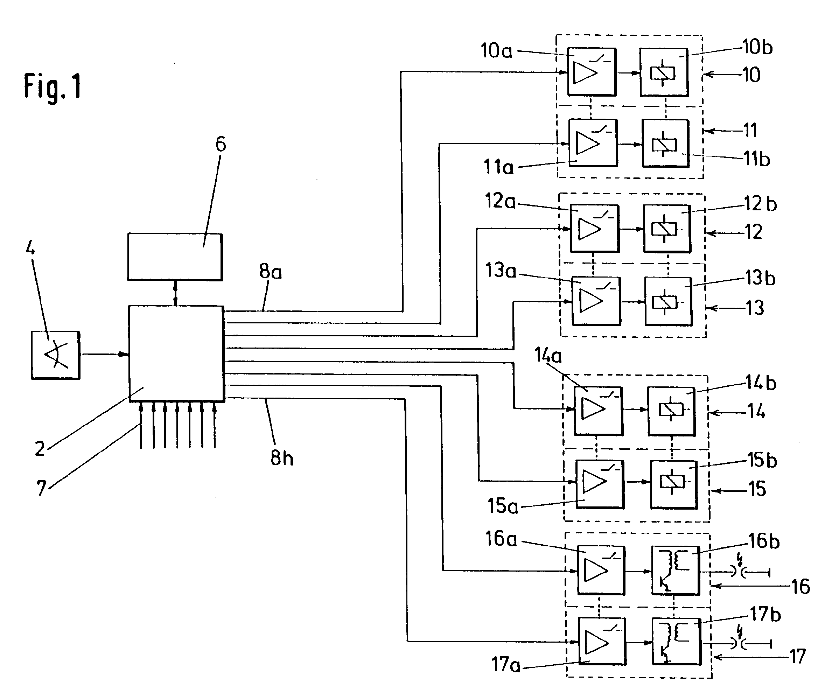

In der Steuereinheit 2 werden die Eingangssignale in Zusammenwirken mit aus einem elektronischen Speicher 6 abzurufenden Steuerprogramm in einzelne Steuerbefehle umgesetzt. Diese Steuerbefehle werden über Datenleitungen 8a - 8h den einzelnen Modulen (s. Fig. 1), nämlich Einspritzventilmodulen 10 und 11, Einlaßventilmodulen 12 und 13, Auslaßventilmodulen 14 und 15 sowie Zündmodulen 16 und 17, die jeweils aus einzelnen elektrischen Schaltern 10a, 11a, 12a, 13a, 14a, 15a, 16a bzw. 17a und einem Einspritzventil 10b und 11b, bzw. einem Einlaßventil 12b und 13b, bzw. einem Auslaßventil 14b und 15b bzw. Zündkerzen 16b und 17b bestehen, zugeführt.

Im Normalbetrieb der Verbrennungskraftmaschine werden der Steuereinheit 2 von dem Absolutwertwinkelgeber 4 über den Parallel-Serien-Wandler 30 die der momentanen Kurbelwellenposition entsprechenden elektrischen Signale zugeleitet. Simultan zu diesen die absolute Kurbelwellenposition angebenden Daten wird durch die Motorstillstandserkennungsschaltung 5 der Steuereinheit 2 ein Signal zugeführt, das einer Bewegung oder dem Stillstand der Kurbelwelle der Verbrennungskraftmaschine entspricht. In Ergänzung zu diesen Regelgrößen werden der Steuereinheit 2 über die Datenleitungen sieben weitere Betriebsparameter der Verbrennungskraftmaschine übermittelt.

In Zusammenwirken mit den aus dem elektronischen Speicher 6 in die Steuereinheit 2 zu übertragenden Steuerprogrammteilen und den aktuellen Betriebsparametern (Regelgrößen) werden in der Steuereinheit 2 Steuersignale erzeugt, die über die Datenleitungen 8a - 8h den Einspritzventilmodulen 10 und 11, den Einlaßventilmodulen 12 und 13, den Auslaßventilmodulen 14 und 15 sowie den Zündmodulen 16 und 17 zugeleitet werden.

Die in den Modulen 10 - 17 angeordneten Schalter 10a - 17a werden durch die aus der Steuereinheit 2 übermittelten Steuersignale geschaltet und steuern jeweils die Einspritzventile 10b und 11b bzw. die Einlaßventile 12b und 13b bzw. die Auslaßventile 14b und 15b und die an die Zündkerzen mit elektrischer Energie versorgenden Zündvorrichtungen 16b und 17b direkt an.

## Patentansprüche

1. Schaltungsandordnung zur elektronischen Steuerung einer Verbrennungskraftmaschine mit einer elektronischen Steuereinheit **(2)** und einem elektronischen Speicher **(6)** zur Speicherung von der Steuereinheit **(2)** zu übermittelnden Steuerprogrammen und mit elektrisch, durch die Steuereinheit **(2)** in Abhängigkeit von **Betriebsparametern,** insbesondere der Kurbelwellenposition, der Motordrehzahl, der Abgaszusammensetzung und dem Motordrehmoment ansteuerbaren Einspritzventilen **(16, 11),** gekennzeichnet durch eine Motorstillstandserkennungsschaltung (5) und einen Absolutwertwinkelgeber (4) mit einer mit der Kurbelwelle der Verbrennungskraftmaschine fest verbundenen Codierscheibe, **welche** einen von der Steuereinheit (2) selbstätig auf Fehler überprüfbaren, vorzugsweise einschrittigen Code zur Erzeugung von der Kurbelwellenposition im Stillstand und in Drehbewegung entsprechenden Signale **besitzt,** sowie elektrischen, der Motortemperatur, der Motorbelastung und dem Motorklopfen entsprechenden elektrischen Signalen, die der elektrischen Steuereinheit (2) als **Betriebsparameter** zugeführt werden, wobei die Einlaßventile (12, 13), die Auslaßventile (14, 15) und die Einspritzventile (10, 11) sowie die Zündvorrichtung (16, 17) in Abhängigkeit der **Be****triebsparameter** von der Steuereinheit (2) **elek****trisch** steuerbar sind, wobei die Steuereinheit (2) ein Hochlaufprogramm besitzt, mit dem die Zündfolge der Motorzylinder, die Einlaßventile (12, 13), die Einspritzventile (10, 11) und die Zündvorrichtung (16, 17) für jede beliebige Zylinderposition des Motorstarts **elektrisch** ansteuerbar sind.

2. Schaltungsanordnung nach Anspruch 1, dadurch gekennzeichnet, daß der Code ein 9-Bit-Gray-Code ist.

3. Schaltungsanordnung nach Anspruch 1 und/oder 2, dadurch gekennzeichnet, daß die Codierscheibe in eine Anzahl von Sektoren unterteilt ist, die der halben Zylinderzahl entspricht.

4. Schaltungsanordnung nach einem der Ansprüche 1 bis 3, dadurch gekennzeichnet, daß die Sektoren mittels einer Flip-Flop-Schaltung auf eine andere Zylindergruppe umschaltbar sind.

5. Schaltungsanordnung nach mindestens einem der Ansprüche 1 bis 4, dadurch gekennzeichnet, daß der Absolutwertwinkelgeber (4) mindestens ein einer Codespur zugeordnetes Signalformungsmodul (20a, 20b) aufweist.

6. Schaltungsanordnung nach einem der Ansprüche 1 bis 5, dadurch gekennzeichnet, daß die Signalformungsmodule (20a, 20b) jeweils einen aus einem Kondensator (Ca bzw. Cb), einer Induktivität (La bzw. Lb) und einem Oszillator (22a bzw. 22b) bestehenden Parallelschwingkreis, einen seriell zum Parallelschwingkreis geschalteten Demodulator (24a bzw. 24b) und einen Komperator (26a bzw. 26b) aufweisen, dessen invertierender Eingang mit dem Ausgang des Demodulators (24a bzw. 24b) verbunden ist und an dessen nicht invertierenden Eingang eine Referenzspannung (U_{RA}, U_{RB}) anliegt und dessen Ausgang mit mindestens einem Paralleleingang eines Parallel-Serien-Wandlers (30) verbunden ist.

7. Schaltungsanordnung nach mindestens einem der Ansprüche 1 bis 6, dadurch gekennzeichnet, daß die Steuereinheit (2) mit einem Sensor zur Motordreherkennung verbunden ist, wobei vorzugsweise das niederwertigste Bit des Paralleleingangs des Parallel-Serien-Wandlers (30) mit dem Eingang der Motorstillstandserkennungsschaltung verbunden ist.

8. Schaltungsanordnung nach mindestens einem der Ansprüche 1 bis 7, dadurch gekennzeichnet, daß die Motorstillstandserkennungsschaltung (5) aus einem Signalgenerator (34), einem Zähler (40), einem UND-Bauelement (38), einem Inverter (IV) und einem eingangsseitig angeordneten Differenzierglied mit einem Kondensator (C2) und einem Widerstand (R1) besteht, welcher das differenzierte Eingangssignal über eine Diode (D1) dem Rücksetz-Eingang (RE) des Zählers (40) zuführt, während der Ausgang des Signalgenerators (34) mit dem ersten Eingang des UND-Bauteils (38) und mindestens ein Ausgang, vorzugsweise der höchstwertige Ausgang (42j), mit dem zweiten Eingang des UND-Bauteils (38) und der Ausgang des UND-Bauteils (38) mit dem Zählereingang (CL) des Zählers (40) verbunden sind.

9. Schaltungsanordnung nach mindestens einem der Ansprüche 1 bis 8, dadurch gekennzeichnet, daß die Einlaß-, Auslaß- und Einspritzventile (10b, 11b, 12b, 13b, 14b, 15b) beim Motorstart sequentiell ansteuerbar sind.

10. Schaltungsanordnung nach mindestens einem der Ansprüche 1 bis 9, dadurch gekennzeichnet, daß die Einlaßventile (12b, 13b), die Auslaßventile (14b, 15b) und die Einspritzventile (10b, 11b) derart von der Steuereinheit (2) ansteuerbar sind, daß der Motor in einem Zweitakt-Arbeitsverfahren betrieben wird.

11. Schaltungsanordnung nach Anspruch 10, dadurch gekennzeichnet, daß die Anzahl der Winkelsektoren einer Nockenwellenumdrehung gleich der Anzahl der Zylinder ist.

## Claims

1. A switching arrangement for the electronic control of an internal combustion engine having an electronic control module (2) and an electronic memory (6) for the storage of control programmes to be transmitted from the control module (2) and having injection valves (16, 11) which can be triggered electrically by the control module (2) as a function of operating parameters, in particular the crankshaft position, the engine speed, the exhaust gas composition and the engine torque,
**characterised by** an engine stoppage identification circuit (5) and an absolute value angle transmitter (4) having a code disc, which is securely connected to the crankshaft of the internal combustion engine and which possesses a preferably single-step code, which can be automatically checked for errors by the control module (2), for the generation of signals corresponding to the crankshaft position during stoppage and during rotation, and also electrical signals corresponding to the engine temperature, engine load and the engine pinking, which are supplied as operating parameters to the electric control module (2), whereby the inlet valves (12, 13), the outlet valves (14, 15) and the injection valves (10, 11) and also the ignition device (16, 17) can be electrically controlled by the control module (2) as a function of the operating parameters, whereby the control module (2) possesses a run-up programme, with which the ignition sequence of the engine cylinders, the inlet valves (12, 13), the injection valves (10, 11) and the ignition device (16, 17) can be electrically triggered for any cylinder position of the engine start-up.

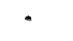

2. A switching arrangement according to Claim 1,
**characterised in that** the code is a 9-bit Gray code.

3. A switching arrangement according to Claim 1 and/or 2,
**characterised in that** the code disc is divided into a number of sectors corresponding to half the number of cylinders.

4. A switching arrangement according to one of Claims 1 to 3,
**characterised in that** the sectors can be switched to another cylinder group by means of a flip-flop circuit.

5. A switching arrangement according to at least one of Claims 1 to 4,
**characterised in that** the absolute value angle transmitter (4) comprises at least one signal forming module (20a, 20b) associated with a code track.

6. A switching arrangement according to one of Claims 1 to 5,
**characterised in that** each signal forming module (20a, 20b) comprises a parallel resonant circuit consisting of a capacitor (Ca or CB), an inductive resistor (La or Lb) and an oscillator (22a or 22b); a demodulator (24a or 24b) connected in series to the parallel resonant circuit and a comparator (26a or 26b), the inverting input of which is connected to the output of the demodulator (24a or 24b) and the non-inverting input of which a reference voltage (U_{RA}, U_{RB}) abuts and the output of which is connected to at least one parallel input of a parallel-series converter (30).

7. A switching arrangement according to at least one of Claims 1 to 6,
**characterised in that** the control module (2) is connected to a sensor for the identification of engine rotation, whereby preferably the lowest value bit of the parallel input of the parallel-series converter (30) is preferably connected to the input of the engine stoppage identification circuit.

8. A switching arrangement according to at least one of Claims 1 to 7,
**characterised in that** the engine stoppage identification circuit (5) consists of a signal generator (34), a counter (40), an AND component (38), an inverter (IV) and a differential element, disposed at the input side, having a capacitor (C2) and a resistor (R1), which supplies the differentiating input signal via a diode (D1) to the reset input (RE) of the counter (40), while the output of the signal generator (34) is connected to the first input of the AND logical unit (38), and at least one output, preferably the highest-value output (42j), is connected to the second input of the AND logical unit (38), and the output of the AND logical unit (38) is connected to the counter input (CL) of the counter (40).

9. A switching arrangement according to at least one of Claims 1 to 8,
**characterised in that** the inlet, outlet and injection valves (10b, 11b, 12b, 13b, 14b, 15b) can be sequentially triggered during engine start-up.

10. A switching arrangement according to at least one of Claims 1 to 9,
**characterised in that** the inlet valves (12b, 13b), the outlet valves (14b, 15b) and the injection valves (10b, 11b) can be triggered by the control module (2) so that the engine is operated in two-stroke operating mode.

11. A switching arrangement according to Claim 10, **characterised in that** the number of angular sectors of a camshaft rotation is equal to the number of cylinders.

## Revendications

1. Disposition de circuit pour la commande électronique d'un moteur à combustion interne avec une unité de commande électronique (2) et une mémoire électronique (6) pour le stockage par l'unité de commande (2) des programmes de commande à transmettre et avec des soupapes d'injection (16, 11) pouvant être commandées électriquement par l'unité de commande (2) en fonction de paramètres de fonctionnement, en particulier de la position de l'arbre de vilebrequin, de la vitesse de rotation du moteur, de la composition des gaz d'échappement et du couple de rotation du moteur, caractérisée par un circuit de détection de l'arrêt du moteur (4) avec un disque de codage relié de façon solidaire à l'arbre du vilebrequin du moteur à combustion interne, disque qui possède un code de préférence cyclique pouvant faire contrôler automatiquement ses défauts par l'unité de commande (2), code servant à produire des signaux correspondant à la position de l'arbre du vilebrequin à l'arrêt et en mouvement ainsi que des signaux électriques correspondant à la température du moteur, à la charge du moteur, et aux cognements du moteur, signaux qui sont envoyés comme paramètres de fonctionnement à l'unité de commande (2), les soupapes d'admission (12, 13), les soupapes d'échappement (14, 15) et les soupapes d'injection (10, 11) ainsi que le dispositif d'allumage (16, 17) pouvant être commandés de façon électrique en fonction des paramètres de fonctionnement par l'unité de commande (2), l'unité de commande (2) possédant un programme d'accélération à pleine puissance, avec lequel on peut commander de façon électrique l'ordre d'allumage des cylindres du moteur, les soupapes d'admission (12, 13), les soupapes d'injection (10,11) et le dispositif d'allumage (16, 17) pour n'importe quelle position des cylindres au démarrage du moteur.

2. Disposition de circuit selon la revendication 1, caractérisée en ce que le code est un Code Gray à 9 bit.

3. Disposition de circuit selon la revendication 1 et/ou 2, caractérisée en ce que le disque de codage est subdivisé en un certain nombre de secteurs, qui correspond à la moitié du nombre des cylindres.

4. Disposition de circuit selon l'une des revendications 1 à 3, caractérisée en ce que les secteurs peuvent être inversés au moyen d'un circuit Flip-Flop et passer sur un autre groupe de cylindres.

5. Disposition de circuit selon au moins l'une des revendications 1 à 4, caractérisée en ce que le capteur angulaire de valeur absolue (4) présente au moins un module (20a, 20b) de mise en forme de signaux associé à une piste de codage.

6. Disposition de circuit selon l'une des revendications 1 à 5, caractérisée en ce que les modules de mise en forme de signaux (20a, 20b) présentent respectivement un circuit oscillant parallèle consistant en un condensateur (Ca ou Cb), une inductance (La ou lb) et un oscillateur (22a ou 22b), un démodulateur monté en série par rapport au circuit oscillant parallèle (24a ou 24b) et un comparateur (26a ou 26b), dont l'entrée d'inversion est reliée à la sortie du démodulateur (24a ou 24b) et sur l'entrée de non inversion duquel est appliquée une tension de référence (U_{RA}, U_{RB}) et dont la sortie est reliée à au moins une entrée en parallèle d'un convertisseur série-parallèle (30).

7. Disposition de circuit selon au moins l'une des revendications 1 à 6, caractérisée en ce que l'unité de commande (2) est reliée à un détecteur servant à détecter la rotation du moteur, le bit de l'ordre le plus bas de l'entrée en parallèle du convertisseur série-parallèle (30) étant de préférence relié à l'entrée du circuit de détection de l'arrêt du moteur.

8. Disposition de circuit selon au moins l'une des revendications 1 à 7, caractérisée en ce que le circuit de détection de l'arrêt du moteur (5) consiste en un générateur de signaux (34), un compteur (40), un composant ET (38), un inverseur (IV) et un organe de différentiation disposé du côté de l'entrée avec un condensateur (C2) et une résistance (R1), qui arrête le signal d'entrée différentié par l'intermédiaire d'une diode (D1) à l'entrée de remise à l'état initial (RE) du compteur (40), tandis que la sortie du générateur de signaux (34) est reliée à la première entrée du composant ET (38) et au moins une sortie, de préférence à la sortie de l'ordre le plus élevé (42j) à la deuxième sortie du composant ET (38) et la sortie du composant ET (38) à l'entrée (CL) du compteur (40).

9. Disposition de circuit selon au moins l'une des revendications 1 à 8, caractérisée en ce que les soupapes d'admission, d'échappement et d'injection (10b, 11b, 12b, 13b, 14b, 15b) peuvent être commandées de façon séquentielle lors du démarrage du moteur.

10. Disposition de circuit selon au moins l'une des revendications 1 à 9, caractérisée en ce que les soupapes d'admission (12b, 13b), les soupapes d'échappement (14b, 15b), et les soupapes d'injection (10b, 11b) peuvent être commandées par l'unité de commande (2) de telle façon que le moteur fonctionne à deux temps.

11. Disposition de circuit selon la revendication 10, caractérisée en ce que le nombre des secteurs angulaires d'une révolution de l'arbre à cames est égal au nombre des cylindres.
